# EUROPEAN PATENT SPECIFICATION

(11) **EP 3 974 723 B1**
(45) Date of publication and mention of the grant of the patent: **30.08.2023**
(21) Application number: 20197905.1
(22) Date of filing: 23.09.2020
(51) Int. Cl.: F23R 3/00, F23M 20/00

(54) **GAS TURBINE FOR POWER PLANT COMPRISING A DAMPING DEVICE**
GASTURBINE FÜR KRAFTWERK MIT EINER DÄMPFUNGSVORRICHTUNG
TURBINE À GAZ POUR CENTRALE ÉLECTRIQUE COMPRENANT UN DISPOSITIF D'AMORTISSEMENT

(43) Date of publication of application: 30.03.2022
(73) Proprietor: Ansaldo Energia Switzerland AG, 5400 Baden (CH)
(72) Inventor: BOUDY, Frédéric, 5408 ENNETBADEN (CH); MAURER, Michael Thomas, 79713 BAD SÄCKINGEN (DE)
(74) Representative: Martini, Gabriele

(56) References cited:
- EP-A1- 3 486 566
- WO-A1-2018/021996
- US-A1- 2002 088 233
- US-A1- 2010 186 411
- US-A1- 2013 037 345
- US-A1- 2017 321 895
- US-A1- 2018 010 798

## Description

### Field of the Invention

The present invention relates to the technical field of the gas turbine assemblies for power plants. As known, in a gas turbine assembly (in the following only gas turbine) an incoming air flow is compressed in a compressor and then mixed with fuel and ignited in a combustor to produce a hot gas flow to be expanded in a turbine for generating a rotating work on a rotor in turn connected to a generator. Inside the combustor combustion/flame instabilities may occur. These combustion/flame instabilities generate pressure oscillations inside the combustion chamber that may generate mechanical damages in the combustor structure. In this technical field, the present invention in detail refers to the technical problem of how to damp a broadband range of combustion pressure oscillations with a minimal impact on the space available outside the combustor.

### Description of prior art

As known, a gas turbine for power plants (in the following only gas turbine) comprises a rotor provided with an upstream compressor sector, a combustor sector and a downstream turbine sector. The terms downstream and upstream refer to the direction of the main gas flow passing through the gas turbine. In particular, the compressor comprises an inlet supplied with air and a plurality of blades compressing the passing air. The compressed air leaving the compressor flows into a plenum, i.e. a closed volume delimited by an outer casing, and from there into the combustor. Inside the combustor the compressed air is mixed with at least one fuel. The mixture of fuel and compressed air flows into the combustor where this mixture are combusted. The resulting hot gas leaves the combustor and expands in the turbine performing work on the rotor.

In order to achieve a high efficiency, a high turbine inlet temperature is required. However, due to this high temperature, high NOx emissions are generated.

In order to reduce these emissions and to increase operational flexibility, today it is known a particular kind of gas turbines performing a sequential combustion cycle.

In general, a sequential gas turbine comprises two combustors in series wherein each combustion stage is provided with burners and combustion chambers. Following the main gas flow direction, the upstream combustor is called "premix" combustor and is fed by the compressed air. The downstream combustor is called "sequential" or "reheat" combustor and is fed by the hot gas leaving the first combustion chamber. According to a first kind of sequential gas turbines, the two combustors are physically separated by a stage of turbine blades, called high pressure turbine.

Following the main gas flow, this first kind of sequential gas turbines comprises a compressor, a first combustor, a high-pressure turbine, a second combustor and a low-pressure turbine. The compressor and the two turbines can be connected to a common rotor which rotates around an axis and is surrounded by a concentric casing.

Today a second kind of sequential gas turbines is known wherein this kind of gas turbines is not provided with the high pressure turbine and the premix and the reheat combustors are arranged directly one downstream the other inside a plurality of can-shaped combustors arranged as a ring around the turbine axis. Each can-combustor is provided with a liner, i.e. the casing limiting the inner combustion chambers, divided in two portions respectively upstream and downstream with respect to the reheat burner. The upstream portion of the liner is called premix liner whereas the downstream portion is called sequential liner and is downstream connected with a flange, called picture frame, facing the turbine. Usually, the sequential liner and the picture frame are realized as a single piece called transition duct configured for guiding the hot gas leaving the combustor towards the turbine, in particular towards the first vane of the turbine.

Of course, according to the prior art practice it is possible to realize a can combustor with a single combustion stage and accordingly comprising a single burner and a single liner defining a single combustion chamber.

The above described different kinds of gas turbines have been mentioned because the present invention can be applied in all these two different kinds of can combustors.

During operation, inside the combustion chambers, combustion/flame instabilities may occur and these combustion/flame instabilities generate pressure oscillations. These pressure oscillations could cause mechanical damages in the combustor structure and limit the operating regime. Mostly gas turbines have to operate in lean mode for compliance to pollution emissions. The burner flame during this mode of operation is extremely sensitive to flow perturbations and can easily be coupled with dynamics of the combustion chamber to lead to thermo-acoustic instabilities.

In view of the above, it is today known to provide the combustion chamber with damping devices in order to damp these pressure oscillations. A traditional damper comprises a damper volume fluidly connected to the combustion chamber that acts as a resonator volume. Today are known two different kinds of damping device. The first kind is called Helmholtz damper and comprises one or more small tubes, called necks, connecting the combustion chamber to the resonator volume. As known, the Helmholtz dampers are not so broadband. Then, by adding other volumes and necks, it is possible to make the damping more broadband, targeting more frequencies. Alternatively, it is possible to provide a plurality of Helmholtz dampers tuned at another frequency in parallel, each being connected to the combustion chamber. It is also possible to provide a multi-volume damper. From the first volume connected to the combustion chamber, it is possible to plug a volume behind with another neck. Thus, the flow will go into the first volume, then the neck, then the second volume and then to the combustion chamber through the second neck. Unfortunately, this kind of damper involves the drawback of impacting in large entity on the space available outside the combustor ("plenum") where the compressed air is flowing.

In order to have a more compact damping device, a second kind of damper is not provided with the foregoing cited necks but with a perforated plate wherein the inner face of this perforated plate is a part of the combustion liner, i.e. in direct contact with the hot gas. The outer face of the perforated plate is facing the resonator volume. This solution is indeed more compact than a Helmholtz damper.

Even if perforated plate dampers are more broadband with respect to a single volume Helmholtz damper, the known damping device having a perforated plate connecting the combustion chamber to the resonator volume does not allow to damp a large range of frequencies.

Starting from this prior art, there is today the need to improve the foregoing described damper with a perforated plate in order to a extend the frequency range of the damper with a minimal impact on the space available outside the combustor.

US2013037345A1 refers to an acoustic dampener in a combustion liner of the combustor of a gas turbine engine. According to US2013037345A1, the acoustic dampener is provided with an orifice plate, placed inside of the dampener.

### SUMMARY OF THE INVENTION

A primary object of the present invention is to provide an improved damping device for a gas turbine combustor. In order to achieve the objective mentioned above, the present invention refers to a gas turbine for power plant wherein this gas turbine has an axis and comprises:
- a compressor sector for compressing ambient air,
- a combustor sector for mixing and combusting the compressed air with at least a fuel, wherein the combustor sector comprises at least a liner defining a combustion chamber having an axial direction A and a circumferential combustor direction C;
- at least a turbine sector for expanding the combusted hot gas flow leaving the combustors and performing work on a rotor;
- at least a damping device arranged outside the combustion chamber and comprising a damping volume and a perforated plate configured for fluidly connecting the combustion chamber to the damping volume for damping pressure fluctuations generated inside the combustion chamber.

The above listed features are well known by the skill person so that additional details are not required. As foregoing mentioned, the combustor sector may be realized according to many different configurations. Preferably, the combustor sector comprises a plurality of can combustors arranged as a ring around the gas turbine axis.

According to the present invention, the perforated plate is a plate slanted-shape so that the radial extent or radial thickness of the perforated plate varies along the axial combustor direction A and/or along the circumferential combustor direction C.

The use of a common perforated plate damper (having a constant radial extent or radial thickness along the axial combustor direction A or along the circumferential combustor direction C) in a certain regime of functioning, which is at low Strouhal number (St<0.5), allows to have broadband frequency dampers. Nevertheless, in the high frequency range, it is difficult to stay in the low Strouhal regime which is proportional to the frequency targeted. In addition, either be in the low or high frequency range, many frequencies fall outside the damping range. As known, in such dampers the perforated plate thickness plays a role by changing the frequency of the damper response. Advantageously, and preferably thanks to the new adding/printing capabilities of manufacturing processes, according to the present invention it is foreseen to print a perforated plate with different thickness for the same damping volume. Thus, this would provide a unique damping volume (or back cavity) closed by a perforated plate equipped with channels of different radial extent suitable for damping a broadband frequency range, this solution provides therefore a large response over the frequency range with only one damping volume minimizing the impact on the space available outside the combustor.

The new perforated plate comprises an inner face, an outer face and a plurality of channels extending, preferably radially, from the inner face to the outer face. The inner face is on the outer surface for the combustor liner. In this case the combustor liner comprises a plurality of holes, in a position corresponding to the channels of the plate for fluidly connecting the combustion chamber to the damping volume.

As foregoing mentioned, the inner face is flat and parallel to the axial combustor direction whereas the outer face is inclined with respect to the axial combustor direction A and/or along the circumferential combustor direction C so that the radial extent of the channels varies along the axial combustor direction A or along the circumferential combustor direction C. According to different embodiments, the radial extent of the channels may decrease or increase along the hot gas flow direction M. Moreover, the perforated plate may comprise a first portion wherein the radial extent of the channels decreases along the axial combustor direction and a second portion wherein the radial extent of the channels increases along the axial combustor direction A.

Preferably, the damping volume discloses a constant radial extent along the axial combustor direction A.

Alternatively or complementary, the radial extent may also vary or be constant along the circumferential combustor direction C.

Preferably, the damping device comprises purge holes for allowing purge air to enter the damping volume.

As foregoing mentioned, the combustor section comprises preferably a plurality of can combustors. In this case the damping device may be annular-shaped as a ring for circumferentially wrapping part of the can combustor liner.

More preferably, each above can combustor may be configured for performing two combustion stages in series and comprises an upstream liner downstream liner. In this case, the damping device may be annular-shaped as a ring for circumferentially wrapping part of the downstream liner.

Preferably, the damping volume may comprise a plurality of sub volumes, for instance, in case of an annular-shape, these sub volumes are divided by a plurality of axial partition walls.

It is to be understood that both the foregoing general description and the following detailed description are exemplary, and are intended to provide further explanation of the invention as claimed. Other advantages and features of the invention will be apparent from the following description, drawings and claims.

The features of the invention believed to be novel are claimed with particularity in the appended claims.

### BRIEF DESCRIPTION OF DRAWINGS

Further benefits and advantages of the present invention will become apparent after a careful reading of the detailed description with appropriate reference to the accompanying drawings.

The invention itself, however, may be best understood by reference to the following detailed description of the invention, which describes an exemplary embodiment of the invention, taken in conjunction with the accompanying drawings, in which:
- figure 1 is a schematic view of a gas turbine for power plants;
- figure 2 is a schematic view of a can combustor for a gas turbine for power plants provided with two combustion stages in series;
- figures 3 and 4 are schematic views of a first embodiment of a damping device according to the present invention;
- figure 5 is a schematic view of a damping device not covered by the claims.

### DETAILED DESCRIPTION OF DRAWINGS

In cooperation with the attached drawings, the technical contents and detailed description of the present invention are described thereinafter according to the preferable embodiments, being not used to limit its executing scope. Any equivalent variation and modification made according to appended claims is all covered by the claims claimed by the present invention.

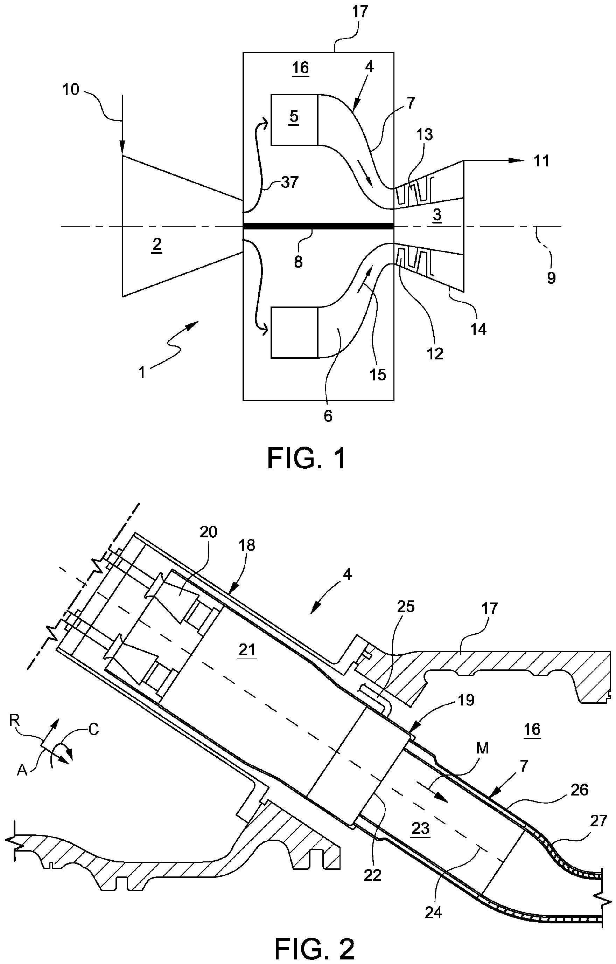

Reference is now made to Fig. 1 that is a schematic view of a gas turbine for power plants that can be provided with the damping device of the present invention. In particular, figure 1 discloses a gas turbine 1 having an axis 9 and comprising a compressor 2, a combustor sector 4 and a turbine 3. As known, air 10 enters the compressor 2 and compressed air leaves the compressor 2 entering a plenum 16, i.e. a volume defined by an outer casing 17 and enclosing the combustor. From the plenum 16, the compressed air 37 enters in the combustor that, in this example, comprises a plurality of can combustors 4 annularly arranged as ring around the axis 9. In the description of figure 1, the terms annular, radial, axial, inner and outer refer to the axis 9 whereas the terms downstream and upstream refer to the gas main flow. Each can combustor 4 comprises burners 5 where the compressed air 37 is mixed with at least a fuel. This mixture is then combusted in a combustion chamber 6 and the resulting hot gas flows towards a downstream turbine 3. The combustion chamber 6 is limited by a liner 7. The turbine 3 comprises a plurality of vanes 12, i.e. stator blades, supported by a vane carrier 14, and a plurality of blades 13, i.e. rotor blades, supported by a rotor 8. In the turbine 3, the hot gas expands performing work on the rotor 8 and leaves the turbine 3 in form of exhaust gas 11.

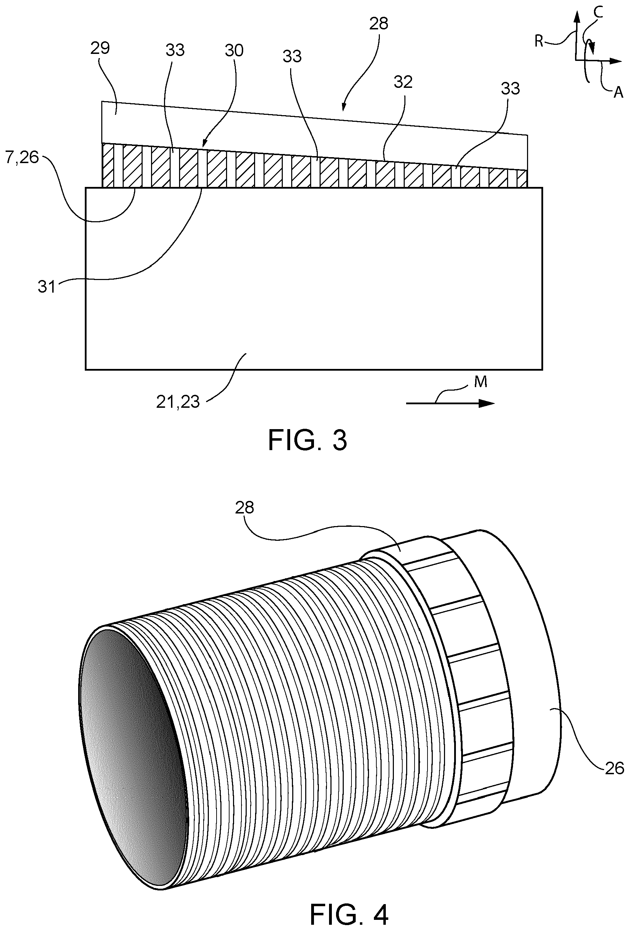

Reference is now made to figure 2 that is an enlarged schematic view of a can combustor 4 that can be improved according the present invention. In particular, figure 2 discloses a can combustor 4 having two stages of combustion in series and housed in a relative portal hole of an outer casing 17 defining the plenum 16 where the compressed air is delivered by the compressor 2. The can combustor 4 has an axis 24 and comprises in series along the gas flow M a first combustor, or premix combustor 18, and a second combustor, or sequential combustor 19. In particular, the first combustor 18 comprises first or premix burners 20 and a first combustion chamber 21. The sequential combustor 19 comprises sequential burners 22 and a second combustion chamber 23. The axis 24 is parallel to the gas flow direction M. According to the embodiment of figure 2, the fuel is fed to the sequential burners 22 by a fuel lance 25 axially extending outside the first combustion chamber 21 up to the sequential burners 22. The combustion chambers 21 23 are delimited by a liner 7. In particular, the premix combustion chamber 21 is limited by an upstream portion of the liner 7 and the sequential combustion chambers 21 by a sequential liner 26 that is part of a transition duct 27 for guiding the hot gas towards the turbine. In figure 3, as also in figure 4, the direction A, R and C refer respectively to the axial direction parallel to the main hot gas flow and to the can axis, to the radial direction and to the circumferential or annular direction.

Reference is now made to figure 3 that is a schematic view of an embodiment of the present invention. In particular, figure 3 discloses a combustion chamber that can be the first combustion chamber 21 or the second combustion chamber 23 of figure 2. The reference 28 of figure 3 refers to a damping device according to the present invention. This damping device 28 comprises a damping volume 29 (in form of a cavity) arranged outside the combustion chamber and a perforated plate 30 connecting the combustion chamber to the damping volume 29. The perforated plate 30 comprises an inner face 31 and an outer face 32 and a plurality of radial channels 33 extending from the inner face 31 and an outer face 32 for connecting the combustion chamber to the damping volume 29. The inner face 31 may be coupled on the liner. The liner comprises holes corresponding to the channels obtained in the perforated plate 30 for fluidly connecting the combustion chamber to the damping volume 29. The outer face 32 of the perforated plate 30 is facing the damping volume 29. The skill person knows how a damping device of this kind (with a perforated plate) works. According to the invention, the perforated plate 30 does not disclose a constant radial extent or a constant radial thickness but it is realized in form of a "slanted" perforated plate wherein the outer face 32 is not parallel to the inner face or the combustion liner but is inclined with respect to the axial direction. Therefore, the radial extent of the channels 33 obtained in the perforated plate 30 varies along the axial direction. In this example, the damping volume 29 discloses a constant radial extent along the axial direction for minimizing the radial size of the damper but it may also have a different configuration. As known the damping volume 29 comprises holes or opening/inlets for allowing purge air to enter the damping volume 29. In this example, the radial extent of the channels decreases along the axial direction A. However also different configurations are possible where the radial extent of the channels increases along the axial direction A or the plate can disclose a first radial increasing portion and a second radial decreasing portion. As disclosed in the general description of the invention, the radial extent of the channels may vary, in combination or in alternative, along the circumferential direction C.

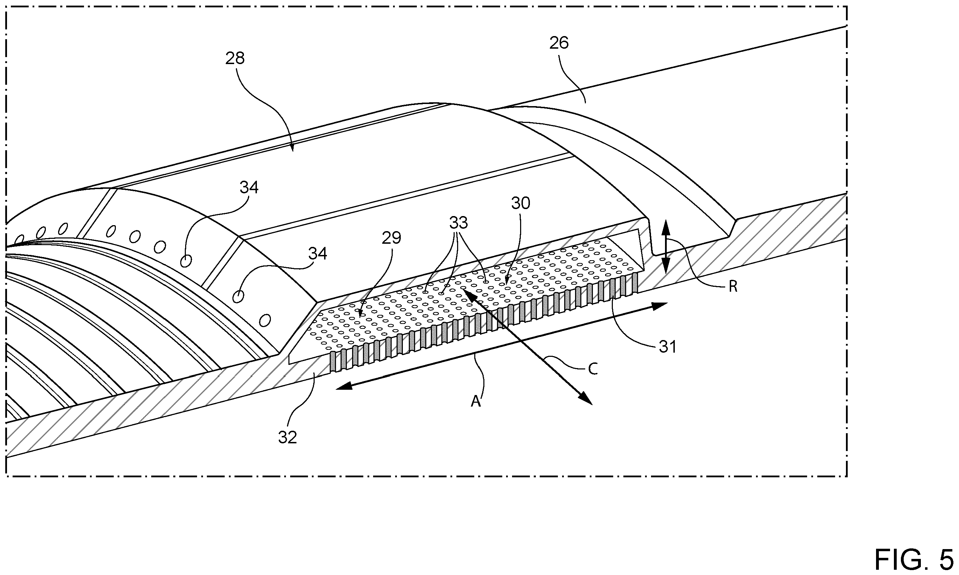

Figure 4 allows to disclose how a damping device 28 may be coupled to a combustor liner. In particular, figure 4 discloses a sequential liner 26 in form of a tubular body and the damping device 28 of the present invention which is annularly arranged around a portion of the liner 26. Figure 5 discloses an enlarged view of a portion of figure 4, which is not covered by the claims.

According to this example, the damping volume 29 annularly arranged around a portion of the liner 26 is divided in a plurality of sub volumes by a plurality of axial partitions. In this case the radial extent of the channels varies along the circumferential direction C. Figure 5 also discloses the purge air holes 34 for the purge air entering the damping volume 29.

Although the invention has been explained in relation to its preferred embodiment(s) as mentioned above, it is to be understood that many other possible modifications and variations could be made without departing from the scope of the present invention defined by the appended claims.

## Claims

1. A gas turbine for power plant; the gas turbine (1) having an axis (9) and comprising:
- a compressor sector (2) for compressing ambient air,
- a combustor sector (4) for mixing and combusting the compressed air with at least a fuel; the combustor sector (4) comprises at least a liner (7, 26) defining a combustion chamber (6, 21, 23) having an axial direction (A) and a circumferential direction (C);
- at least a turbine sector (3) for expanding the combusted hot gas flow leaving the combustors (4) and performing work on a rotor (8);
- at least a damping device (28) arranged outside the combustion chamber (6, 21, 23) and comprising a damping volume (29) and a perforated plate (30) configured for fluidly connecting the combustion chamber (6, 21, 23) to the damping volume (29) for damping pressure fluctuations generated inside the combustion chamber (6, 21, 23);
wherein the perforated plate (30) is slanted shape so that the radial thickness of the perforated plate (30) varies along the axial combustor direction (A) and/or along the circumferential combustor direction (C);
wherein the perforated plate (30) comprises an inner face (31), an outer face (32) and a plurality of channels (33) extending from the inner face (31) to the outer face (32);
**characterized in that**
the inner face (31) is arranged on the outer surface for the combustor liner; the combustor liner comprises a plurality of holes at the channels (33) for fluidly connecting the combustion chamber (6, 21, 23) to the damping volume (29);
wherein the inner face (31) is flat and parallel to the axial combustor direction (A), the outer face (32) is inclined with respect to the axial combustor direction (A) and or along the circumferential combustor direction (C) so that the radial extent of the channels (33) varies along the axial combustor direction (A) and/or along the circumferential combustor direction (C).

2. Gas turbine as claimed in claim 1, wherein at least the perforated plate (30) is realized by an adding manufacturing process, preferably a printing manufacturing process.

3. Gas turbine as claimed in claim 1, wherein the radial extent of the channels (33) decreases along the hot gas flow direction (M).

4. Gas turbine as claimed in claim 1, wherein the radial extent of the channels (33) increases along the hot gas flow direction (M).

5. Gas turbine as claimed in claim 1, wherein in a first portion of the perforated plate (30) the radial extent of the channels (33) decreases along the axial combustor direction (A), in a second portion of the perforated plate (30) the radial extent of the channels (33) increases along the axial combustor direction (A).

6. Gas turbine as claimed in claims 1 or 3 or 4 or 5, wherein the radial extent of the channels (33) varies along the circumferential combustor direction (C).

7. Gas turbine as claimed in claims 1 or 3 or 4 or 5, wherein the radial extent of the channels (33) is constant along the circumferential combustor direction (C).

8. Gas turbine as claimed in any one of the foregoing claims, wherein the damping volume (29) discloses a constant radial extent along the axial combustor direction (A).

9. Gas turbine as claimed in any one of the foregoing claims, wherein the damping device (28) comprises purge hole for allowing purge air to enter the damping volume (29).

10. Gas turbine as claimed in any one of the foregoing claims, wherein the combustor is a can combustor; the damping device (28) is annular-shaped for circumferentially wrapping part of the combustor liner.

11. Gas turbine as claimed in claim 10, wherein the can combustor is configured for performing two combustion stages in series and comprises an upstream liner and a downstream liner; the damping device (28) is annular-shaped for circumferentially wrapping part of the downstream liner.

12. Gas turbine as claimed in claim 9 or 10, wherein damping volume (29) comprises a plurality of sub volumes divided by a plurality of axial partition walls.

## Patentansprüche

1. Gasturbine für ein Kraftwerk; wobei die Gasturbine (1) eine Achse (9) aufweist und umfasst:
- einen Kompressorabschnitt (2) zum Komprimieren von Umgebungsluft,
- einen Brennkammerabschnitt (4) zum Mischen und Verbrennen der komprimierten Luft mit wenigstens einem Brennstoff; wobei der Brennkammerabschnitt (4) wenigstens eine Auskleidung (7, 26) umfasst, die eine Brennkammer (6, 21, 23) mit einer axialen Richtung (A) und einer Umfangsrichtung (C) definiert;
- wenigstens einen Turbinenabschnitt (3) zum Expandieren des verbrannten Heißgasstroms, der aus den Brennkammern (4) austritt und Arbeit an einem Rotor (8) verrichtet;
- wenigstens eine Dämpfungsvorrichtung (28), die außerhalb der Brennkammer (6, 21, 23) angeordnet ist und ein Dämpfungsvolumen (29) und eine perforierte Platte (30) umfasst, die dazu konfiguriert ist, die Brennkammer (6, 21, 23) mit dem Dämpfungsvolumen (29) fluidisch zu verbinden, um Druckschwankungen zu dämpfen, die innerhalb der Brennkammer (6, 21, 23) erzeugt werden;
wobei die perforierte Platte (30) eine schräge Form aufweist, so dass die radiale Dicke der perforierten Platte (30) entlang der Brennkammer-Axialrichtung (A) und/oder entlang der Brennkammer-Umfangsrichtung (C) variiert;
wobei die perforierte Platte (30) eine Innenfläche (31), eine Außenfläche (32) und mehrere Kanäle (33), die sich von der Innenfläche (31) zur Außenfläche (32) erstrecken, umfasst;
**dadurch gekennzeichnet, dass**
die Innenfläche (31) an der Außenoberfläche für die Brennkammerauskleidung angeordnet ist; wobei die Brennkammerauskleidung mehrere Löcher an den Kanälen (33) umfasst, um die Brennkammer (6, 21, 23) mit dem Dämpfungsvolumen (29) fluidisch zu verbinden;
wobei die Innenfläche (31) flach und parallel zur Brennkammer-Axialrichtung (A) ist, wobei die Außenfläche (32) in Bezug auf die Brennkammer-Axialrichtung (A) und/oder entlang der Brennkammer-Umfangsrichtung (C) geneigt ist, so dass die radiale Ausdehnung der Kanäle (33) entlang der Brennkammer-Axialrichtung (A) und/oder entlang der Brennkammer-Umfangsrichtung (C) variiert.

2. Gasturbine nach Anspruch 1, wobei wenigstens die perforierte Platte (30) durch einen additiven Herstellungsprozess, vorzugsweise einen Druckherstellungsprozess, gebildet ist.

3. Gasturbine nach Anspruch 1, wobei die radiale Ausdehnung der Kanäle (33) entlang der Heißgasströmungsrichtung (M) abnimmt.

4. Gasturbine nach Anspruch 1, wobei die radiale Ausdehnung der Kanäle (33) entlang der Heißgasströmungsrichtung (M) zunimmt.

5. Gasturbine nach Anspruch 1, wobei in einem ersten Abschnitt der perforierten Platte (30) die radiale Ausdehnung der Kanäle (33) entlang der Brennkammer-Axialrichtung (A) abnimmt, und in einem zweiten Abschnitt der perforierten Platte (30) die radiale Ausdehnung der Kanäle (33) entlang der Brennkammer-Axialrichtung (A) zunimmt.

6. Gasturbine nach Anspruch 1 oder 3 oder 4 oder 5, wobei die radiale Ausdehnung der Kanäle (33) entlang der Brennkammer-Umfangsrichtung (C) variiert.

7. Gasturbine nach Anspruch 1 oder 3 oder 4 oder 5, wobei die radiale Ausdehnung der Kanäle (33) entlang der Brennkammer-Umfangsrichtung (C) konstant ist.

8. Gasturbine nach einem der vorangehenden Ansprüche, wobei das Dämpfungsvolumen (29) entlang der Brennkammer-Axialrichtung (A) eine konstante radiale Ausdehnung aufweist.

9. Gasturbine nach einem der vorangehenden Ansprüche, wobei die Dämpfungsvorrichtung (28) eine Spülöffnung umfasst, um ein Eintreten von Spülluft in das Dämpfungsvolumen (29) zu ermöglichen.

10. Gasturbine nach einem der vorangehenden Ansprüche, wobei der Brenner ein Dosenbrenner ist; wobei die Dämpfungsvorrichtung (28) ringförmig ist, um einen Teil der Brennerauskleidung in Umfangsrichtung zu umhüllen.

11. Gasturbine nach Anspruch 10, wobei der Dosenbrenner dazu konfiguriert ist, zwei Verbrennungsstufen in Serie durchzuführen, und eine stromaufwärts gelegene Auskleidung und eine stromabwärts gelegene Auskleidung umfasst; wobei die Dämpfungsvorrichtung (28) ringförmig ist, um einen Teil der stromabwärts gelegenen Auskleidung in Umfangsrichtung zu umhüllen.

12. Gasturbine nach Anspruch 9 oder 10, wobei das Dämpfungsvolumen (29) mehrere Teilvolumen umfasst, die durch mehrere axiale Trennwände getrennt sind.

## Revendications

1. Turbine à gaz pour centrale électrique ; la turbine à gaz (1) ayant un axe (9) et comprenant :
- un secteur de compresseur (2) pour comprimer l'air ambiant,
- un secteur de chambre de combustion (4) pour mélanger et brûler l'air comprimé avec au moins un combustible avec au moins un combustible ; le secteur de chambre de combustion (4) comprend au moins un revêtement (7, 26) définissant une chambre de combustion (6, 21, 23) ayant une direction axiale (A) et une direction circonférentielle (C) ;
- au moins un secteur de turbine (3) pour détendre le flux de gaz chauds brûlés quittant les chambres de combustion (4) et effectuant un travail sur un rotor (8) ;
- au moins un dispositif d'amortissement (28) disposé à l'extérieur de la chambre de combustion (6, 21, 23) et comprenant un volume d'amortissement (29) et une plaque perforée (30) configurée pour relier de manière fluide la chambre de combustion (6, 21, 23) au volume d'amortissement (29) afin d'amortir les fluctuations de pression générées à l'intérieur de la chambre de combustion (6, 21, 23) ;
dans laquelle
la plaque perforée (30) est inclinée de sorte que l'épaisseur radiale de la plaque perforée (30) varie le long de la direction axiale de la chambre de combustion (A) et/ou le long de la direction circonférentielle de la chambre de combustion (C) ;
la plaque perforée (30) comprend une face intérieure (31), une face extérieure (32) et plusieurs canaux (33) s'étendant de la face intérieure (31) à la face extérieure (32) ;
**caractérisé en ce que** la face intérieure (31) est disposée sur la surface extérieure du revêtement de la chambre de combustion ; le revêtement de la chambre de combustion comprend une pluralité de trous au niveau des canaux (33) pour relier de manière fluide la chambre de combustion (6, 21, 23) au volume d'amortissement (29) ;
dans laquelle la face intérieure (31) est plate et parallèle à la direction axiale de la chambre de combustion (A), la face extérieure (32) est inclinée par rapport à la direction axiale de la chambre de combustion (A) et/ou le long de la direction circonférentielle de la chambre de combustion (C), de sorte que l'étendue radiale des canaux (33) varie le long de la direction axiale de la chambre de combustion (A) et/ou le long de la direction circonférentielle de la chambre de combustion (C).

2. Turbine à gaz selon la revendication 1, dans laquelle au moins la plaque perforée (30) est réalisée par un procédé de fabrication par addition, de préférence un procédé de fabrication par impression.

3. Turbine à gaz selon la revendication 1, dans laquelle l'étendue radiale des canaux (33) diminue le long de la direction d'écoulement des gaz chauds (M).

4. Turbine à gaz selon la revendication 1, dans laquelle l'étendue radiale des canaux (33) augmente le long de la direction d'écoulement des gaz chauds (M).

5. Turbine à gaz selon la revendication 1, dans laquelle, dans une première partie de la plaque perforée (30), l'étendue radiale des canaux (33) diminue le long de la direction axiale de la chambre de combustion (A), dans une deuxième partie de la plaque perforée (30), l'étendue radiale des canaux (33) augmente le long de la direction axiale de la chambre de combustion (A).

6. Turbine à gaz selon la revendication 1, 3, 4 ou 5, dans laquelle l'étendue radiale des canaux (33) varie le long de la direction circonférentielle de la chambre de combustion (C).

7. Turbine à gaz selon la revendication 1, 3, 4 ou 5, dans laquelle l'étendue radiale des canaux (33) est constante le long de la direction circonférentielle de la chambre de combustion (C).

8. Turbine à gaz selon l'une quelconque des revendications précédentes, dans laquelle le volume d'amortissement (29) présente une étendue radiale constante le long de la direction axiale de la chambre de combustion (A).

9. Turbine à gaz selon l'une quelconque des revendications précédentes, dans laquelle le dispositif d'amortissement (28) comprend un orifice de purge permettant à l'air de purge de pénétrer dans le volume d'amortissement (29).

10. Turbine à gaz selon l'une quelconque des revendications précédentes, dans laquelle la chambre de combustion est une chambre de combustion tubulaire ; le dispositif d'amortissement (28) est de forme annulaire pour envelopper circonférentiellement une partie du revêtement de la chambre de combustion.

11. Turbine à gaz selon la revendication 10, dans laquelle la chambre de combustion est configurée pour effectuer deux étapes de combustion en série et comprend un revêtement en amont et un revêtement en aval ; le dispositif d'amortissement (28) est de forme annulaire pour envelopper circonférentiellement une partie du revêtement en aval.

12. Turbine à gaz selon la revendication 9 ou 10, dans laquelle le volume d'amortissement (29) comprend plusieurs sous-volumes divisés par une pluralité de cloisons axiales.
